# EUROPEAN PATENT APPLICATION

(11) **EP 4 491 476 A1**
(43) Date of publication of application: **15.01.2025**
(21) Application number: 23185355.7
(22) Date of filing: 13.07.2023
(51) Int. Cl.: B60W 30/14

(54) **METHOD FOR INDUCING THE USE OF A SPEED CONTROL SYSTEM OF A VEHICLE, DATA PROCESSING APPARATUS, COMPUTER PROGRAM, COMPUTER-READABLE STORAGE MEDIUM, SPEED CONTROL SYSTEM, AND VEHICLE**

(71) Applicant: Volvo Car Corporation, 405 31 Göteborg (SE)
(72) Inventor: ALQAWASMEH, Mohammad, 40531 Göteborg (SE)
(74) Representative: Maiwald GmbH

(57) **Abstract**

The disclosure relates to a method for inducing the use of a speed control system of a vehicle. The method comprises receiving a current speed value (V) describing a current speed of the vehicle and determining whether the current speed value (V) lies within a speed range (R). If the current speed value (V) has been lying within the speed range (R) for a first time period (T) or longer, a message to a user of the vehicle is triggered. The message comprises a recommendation to use the speed control system. Additionally, a data processing apparatus, a computer program and a computer-readable storage medium are presented. Moreover, a speed control system for a vehicle and a vehicle comprising a speed control system are explained.

## Description

### TECHNICAL FIELD

The present disclosure relates to a method for inducing the use of a speed control system of a vehicle.

The present disclosure is also directed to a data processing apparatus comprising means for carrying out such a method.

Moreover, the present disclosure relates to a computer program and a computer-readable storage medium.

Furthermore, the present disclosure is directed to a speed control system for a vehicle and a vehicle.

### BACKGROUND ART

Speed control systems for vehicles are known. In the following, a speed control system will be understood as a system that is configured to automatically control a longitudinal speed of a vehicle. Therefore, such speed control systems may as well be called automatic speed control systems. Usually, the speed is controlled to be constant, i.e. to correspond to a target speed. After having set the target speed, no more driver interaction is needed for maintaining the speed. This may enhance the driver's comfort. Sometimes, such systems are called cruise control systems. However, also more complex autonomous driving systems may comprise a speed control system. For example, a highway pilot systems which is configured to autonomously drive a vehicle on a highway may comprise a speed control system which in this case is a sub-system of the highway pilot system.

### SUMMARY

It is an objective of the present disclosure to further improve the driver comfort.

The problem is at least partially solved or alleviated by the subject matter of the independent claims of the present disclosure, wherein further examples are incorporated in the dependent claims.

According to a first aspect, there is provided a method for inducing the use of a speed control system of a vehicle. The method comprises:
- receiving a current speed value describing a current speed of the vehicle,
- triggering a message to a user of the vehicle, if the current speed value has been lying within a speed range for a first time period or longer, wherein the message comprises a recommendation to use the speed control system.

In the present context, the speed range may be defined by a fixed upper limit and a fixed lower limit. Alternatively, the speed range may be defined by a variable upper limit and a variable lower limit. According to a further alternative, the speed range may be defined by a reference speed and a fixed or variable speed span. In the latter alternative, an upper limit of the speed range may be calculated by adding the speed span to the reference speed. A lower limit of the speed range may be calculated by subtracting the speed span from the reference speed. The speed range is narrow as compared to the current speed of the vehicle. Consequently, if the current speed value lies within the speed range for a first time period or longer, the vehicle is travelling at a roughly constant speed for the first time period or longer. Optionally, the first time period is predefined, i.e. known and fix. In such a situation, the speed control system may be used for controlling the longitudinal speed of the vehicle. This increases driver comfort. For example, the driver can have his or her foot in a more relaxed position. Moreover, the driver is not subject to the mental load of having to control the longitudinal speed. Additionally, road safety is increased since unforeseeable variations in speed are reduced. This has a positive effect on traffic flow, too. Furthermore, the energy efficiency of the vehicle is increased. This is due to the fact that when using the speed control system, a constant and comparatively low torque can be provided by the controller instead of a varying torque usually requested by a human driver.

In other words, using the present method, situations may be detected in which the use of a speed control system would be advantageous, but the driver or user of the vehicle does not activate the speed control system. This may be due to the fact that the driver forgets to activate the speed control system or does not even know that the vehicle is equipped with a speed control system. Following the message triggered by the present method, the driver or user may consider to use the speed control system. Thereby, both driver comfort and road safety is enhanced.

In an example, the method further comprises determining whether the current speed value lies within a speed range. This step may be used as an intermediate step to determine whether the condition for triggering the message is met. This means that an upper limit and a lower limit of the speed range are known. Thus, the condition for triggering the message may be determined in a reliable manner.

In another example, the method further comprises determining whether the current speed value has been lying within the speed range for a first time period or longer. Also this step may be used as an intermediate step to determine whether the condition for triggering the message is met. As before, the first time period may be predefined. This means that a known numeric value indicating this first time period is known. Thus, the condition for triggering the message may be determined in a reliable manner.

In an example, the speed range may be adapted as a function of a current speed of the vehicle.

For example, if the vehicle has been traveling at a speed exceeding the upper limit of the speed range for a certain time, a speed range correction procedure may be triggered which will move the speed range towards higher speeds. The speed span may be kept constant.

In another example, if the vehicle has been traveling at a speed being smaller than the lower limit of the speed range for a certain time, a speed range correction procedure may be triggered which will move the speed range towards lower speeds. The speed span may be kept constant.

Altogether, assessing whether the current speed of the vehicle has been lying within the speed range for a first time period or longer comes back to assessing whether the vehicle has been traveling at a constant speed or whether the current speed of the vehicle has been swinging around a constant speed with a comparatively small variance. In other words, the method is configured to determine whether the current driving behavior, as far as the longitudinal speed is concerned, may be provided by the speed control system.

In an example, the method further comprises receiving a user input in response to the message and triggering an activation of the speed control system, if the user input comprises an acceptance of the message. If the user input does not comprise an acceptance, the method is abandoned. The user input may for example be received via a touchscreen, a button on a steering wheel, a speech command or any other suitable input device. Thus, it is easy for a driver to accept the recommendation and use the speed control system.

In an example, the method further comprises determining an average speed value of the vehicle. The average speed value may be calculated as the average speed of the speed range i.e. the speed lying in the middle between the upper limit and the lower limit of the speed range. Alternatively, the average value speed may be calculated using historic current speed values. The average speed value may be a floating average.

In an example, the method further comprises
- integrating the average speed value in the message and/or
- providing the average speed value to the speed control system when triggering the activation of the speed control system, wherein the average speed value is used as a target speed of the automatic speed control system.

Thus, the method does not only recommend using the speed control system, but also recommends a speed to which the speed control system may be set. If the driver accepts the recommendation, the speed control system is automatically set to the recommended speed. This further increases the comfort of the driver and the ease of using the speed control system.

In an example, the method further comprises determining an energy consumption rate of the vehicle after having triggered the activation of the speed control system. Additionally or alternatively, an energy consumption rate may be estimated that the vehicle would have had without activation of the speed control system. In the present example, an energy consumption rate may be expressed as an average energy per time unit, e.g. in Watts or in Joules per Second. Alternatively, the energy consumption rate may be expressed as an average energy per distance unit, e.g. Joules per kilometer. In order to estimate the energy consumption rate that the vehicle would have had without activation of the speed control system, an energy consumption rate of the vehicle may be determined before triggering the activation of the speed control system. This energy consumption rate can serve as a basis for estimation. The energy consumption rate determined before triggering the activation of the speed control system may be associated to driving data indicative of a driving state of the vehicle, e.g. a driving speed or an acceleration. Consequently, the estimation of the energy consumption rate that the vehicle would have had without activation of the speed control system can be based on the similarity of driving states. This means that, for example, the energy consumption rate is assumed to be the same if the vehicle is driving at the same driving speed or has the same acceleration. This offers the possibility to compare an energy consumption rate of the vehicle using the speed control system and not using the speed control system. Based thereon, energy savings resulting from the use of the speed control system may be estimated. Moreover, a feedback may be provided to a driver showing an energy consumption rate and/or energy savings that have been achieved by using the speed control system. Overall, the energy efficiency of the vehicle is enhanced.

In an example, the energy consumption rate of the vehicle before triggering the activation of the speed control system is assessed once the current speed of the vehicle lies within the speed range for the first time. In other words, the energy consumption rate of the vehicle before triggering the activation of the speed control system is assessed during the first time period that the current speed needs to lie within the speed range in order to trigger the message. In this example, the determined energy consumption rate before triggering the activation of the speed control system is assessed in a situation which is highly comparable to a situation in which the speed control system is used. Consequently, a comparison based thereon is very reliable.

In an example, the method further comprises determining an energy consumption of the vehicle during a second time period after having triggered the activation of the speed control system based on the determined energy consumption rate and/or estimating an energy consumption of the vehicle during the second time period that the vehicle would have had without activation of the speed control system. In this context, the energy consumption may be an integral over the energy consumption rates occurring during the second time period. The energy consumption may be measured in Joules. This offers the possibility to compare an energy consumption of the vehicle using the speed control system and not using the speed control system. Based thereon, energy savings resulting from the use of the speed control system may be estimated. Moreover, a feedback may be provided to a driver showing an energy consumption and/or energy savings that have been achieved by using the speed control system. Overall, the energy efficiency of the vehicle is enhanced.

In an example, the second time period corresponds to a total time period during which the speed control system is activated. Thus, an energy consumption of the vehicle using the speed control system and not using the speed control system may be compared for an entire drive cycle.

In an example, the method further comprises triggering an energy consumption message to the user of the vehicle, wherein the energy consumption message describes at least a difference of the estimated energy consumption that the vehicle would have had during the second time period without activation of the speed control system and the energy consumption of the vehicle during the second time period after having triggered the activation of the speed control system. Consequently, the user of the vehicle is informed about the amount of energy that has been saved by using the speed control system. This may increase the tendency of the user to activate the speed control system more often in the future. Overall, the energy consumption of the vehicle is reduced.

In an example, the method comprises comparing the energy consumption or energy consumption rate of the vehicle before triggering the activation of the speed control system and/or the estimated energy consumption or energy consumption rate that the vehicle would have had without activation of the speed control system and the energy consumption or energy consumption rate of the vehicle after having triggered the activation of the speed control system. This may be done as a preparation for the energy consumption message. Thus, relevant indicators relating to the energy consumption or energy consumption rate of the vehicle can be provided to the user of the vehicle.

In an example, the method further comprises evaluating whether the vehicle is located in an area where the use of the speed control system is allowed and/or recommended. The message is triggered only if the vehicle is located in an area where the use of the speed control system is allowed and/or recommended. If the vehicle is located in an area where the use of the speed control system is not allowed and/or not recommend, the method is abandoned. The evaluation whether the vehicle is located in an area where the use of the speed control system is allowed and/or recommended may be based on a map which may be provided by a navigation system. In this context, an area where the use of the speed control system is allowed may be marked within the map. The marking may relate to areas, in which the use of a speed control system is legally allowed. Additionally or alternatively, areas where the use of the speed control system is recommended may be marked in the map. Being recommended may imply that the use of the speed control system is also allowed in the respective area. The marking of areas where the use of the speed control system is recommended may relate to areas in which the use of the speed control system is generally considered to be advantageous. In such areas it is usual that vehicles travel at relatively constant speeds. The use of the speed control system may for example be recommended for highways. Thus, the reliability of the method is enhanced since the activation of the speed control system in an area where the use thereof is not allowed and/or not recommend it is excluded. This enhances road safety.

In an example, the message is provided for a third time period only. After the third time period has lapsed, the message disappears. Consequently, the user only has this third time period to accept the recommendation. Consequently, the distraction of a user by a message which he or she does not intend to accept is reduced to a minimum.

It is noted that the third time period refers to the provision of a message, wherein the first time period is associated with a current speed value lying within a speed range. Thus, the first time period and the third time period relate to different aspects. This does not exclude that the first time period and the third time period may assume the same numeric value in a specific example.

In an example, the message comprises a visual message and/or an audio message. The visual message may be displayed on a screen inside the vehicle. The audio message may comprise a voice message or a signal tone. In both alternatives, the driver can easily perceive the message but at the same time is still be able to observe the traffic around the vehicle.

In an example, the method further comprises:
- receiving a current speed limit information describing a speed limit applicable in a current location of the vehicle, and
- triggering a warning message, if the current speed value or the average speed value exceeds the current speed limit information.

The speed limit information may be provided by a map of the navigation system. Additionally or alternatively, the speed limit information may be provided by a road sign recognition system. Prior to triggering the warning message, the current speed limit information may be compared to the current speed value. The warning message informs the driver that he or she is driving too fast. Consequently, the driver is incited to reduce speed.

According to another example, the warning message is triggered if the average speed value exceeds the current speed limit information. This is an alternative to triggering the warning message if the current speed value exceeds the current speed limit information. When using the average speed value instead of the current speed value, extremes of the current speed value are smoothened. This has the effect that in cases where the current speed value exceeds the current speed limit information for a short time period only, i.e. such that the average speed value does not exceed the current speed limit information, no warning message is triggered. The warning message is only triggered if the current speed value exceeds the current speed limit information in a way that also the average speed value exceeds the current speed limit information. Altogether, the user of the vehicle may receive less warning messages, however these warning messages may appear to be more important to the user.

In an example, the warning message is included into the message as defined above. However, instead of the average speed value, the speed limit information may be provided to the speed control system and the speed limit information may be used as a target speed of the speed control system. Consequently, it is impossible to set the speed control system to a target speed exceeding the current speed limit. This enhances road safety.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Using such a data processing apparatus, one can determine whether the current speed value lies within the speed range for a first time period or longer, i.e. whether the vehicle has been driving at a roughly constant or similar speed for the first time period or longer. In such a situation, the speed control system may be used for controlling the longitudinal speed of the vehicle. This increases driver comfort. Additionally, road safety and energy efficiency of the vehicle are increased.

According to a third aspect, there is provided a computer program comprising instructions which, when the program is executed by a computer, cause the computer to carry out the method of the present disclosure. Using such a computer program incites a driver of a vehicle to use the speed control system whenever appropriate. This increases driver comfort. Additionally, road safety and energy efficiency of the vehicle are increased.

According to a fourth aspect, there is provided a computer-readable storage medium comprising instructions which, when executed by a computer, cause the computer to carry out the method of the present disclosure. Using such a computer-readable storage medium incites a driver of a vehicle to use the speed control system whenever appropriate. This increases driver comfort. Additionally, road safety and energy efficiency of the vehicle are increased.

According to a fifth aspect, there is provided a speed control system for a vehicle comprising a data processing apparatus according to the present disclosure. Thus, such a speed control system has the ability to recommend its use to a driver. Thereby, driver comfort, road safety and energy efficiency of the vehicle are increased.

According to a sixth aspect, there is provided a vehicle comprising a data processing apparatus according to the present disclosure and/or a speed control system according to the present disclosure. In such a vehicle, the use of the speed control system can be recommended to the driver, whenever appropriate. This increases driver comfort, road safety and energy efficiency of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure having a speed control system according to the present disclosure, wherein the speed control system comprises a data processing apparatus according to the present disclosure, a computer program according to the present disclosure and a computer-readable storage medium according to the present disclosure, and wherein the use of the speed control system may be induced by a method of the present disclosure,
- Figure 2: shows a current speed and a corresponding throttle position of the vehicle of Figure 1, while the vehicle is operated manually,
- Figure 3: illustrates steps of the method for inducing the use of the speed control system of the vehicle, and
- Figure 4: shows a portion of an instrument cluster of the vehicle of Figure 1 showing an example of a message being triggered by the method for inducing the use of the speed control system of the vehicle.

### DETAILED DESCRIPTION

The Figures are merely schematic representations and serve only to illustrate examples of the disclosure. Identical or equivalent elements are in principle provided with the same reference signs.

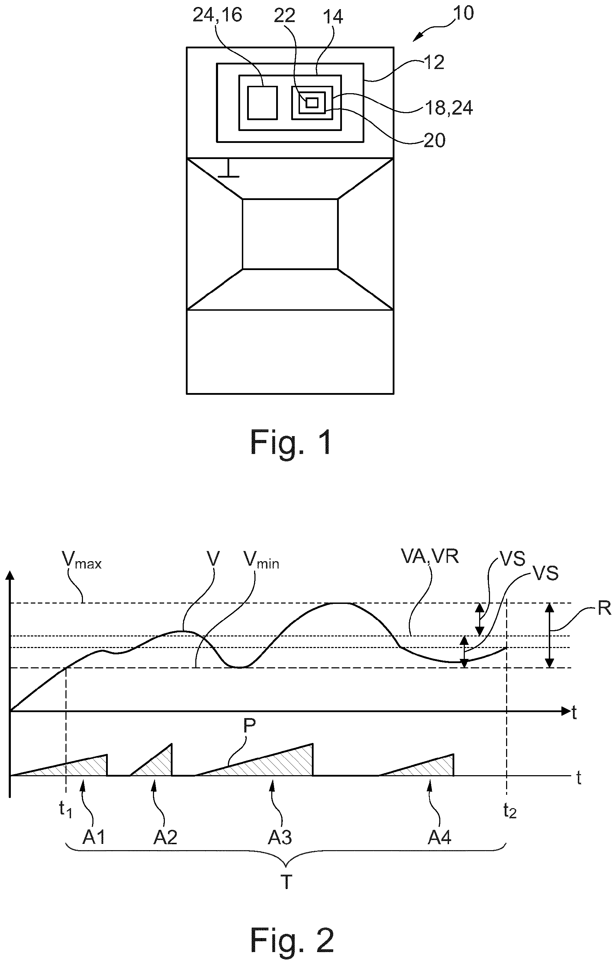

Figure 1 shows a vehicle 10 comprising a speed control system 12.

The speed control system 12 is configured to control a longitudinal speed of the vehicle 10 such that it corresponds to a set target speed. Thus, in the present example, the speed control system 12 may be called a cruise control. However, it is also possible that the speed control system 12 forms part of a more complex autonomous driving system such as a highway pilot system being configured to autonomously drive a vehicle on a highway.

The speed control system 12 comprises data processing apparatus 14.

The data processing apparatus 14 comprises a data processing unit 16 and a data storage unit 18.

The data storage unit 18 comprises a computer-readable storage medium 20 comprising instructions which, when executed by the data processing unit 16 or, more generally, a computer, cause the data processing unit 16 or the computer to carry out a method for inducing the use of the speed control system 12 of the vehicle 10.

On the computer-readable storage medium 20, there is provided a computer program 22 comprising instructions which, when the computer program 22 is executed by the data processing unit 16 or, more generally, a computer, cause the data processing unit 16 or the computer to carry out the method for inducing the use of the speed control system 12 of the vehicle 10.

Thus, the data processing unit 16 and the data storage unit 18 form means 24 for carrying out the method for inducing the use of the speed control system 12 of the vehicle 10.

In the following, the method for inducing the use of the speed control system 12 of the vehicle 10 will be explained with reference to Figures 2 to 4.

It is assumed that in a starting situation, the vehicle 10 is manually operated by a driver, i.e. no system for operating the vehicle in a fully or partly autonomous manner is used. Especially, the speed control system 12 is de-activated.

Figure 2 shows a current speed value V of the vehicle 10 over time t. Moreover, a corresponding throttle position P is illustrated on the same time scale. The throttle position P being zero corresponds to the accelerator pedal not being depressed. A positive throttle position P means that the accelerator pedal is depressed.

As can be seen from Figure 2, the driver does not continuously use the accelerator pedal but depresses it during a total of four acceleration phases A1, A2, A3 and A4. In doing so, the driver adjusts the current speed value V according to his or her wishes.

The method for inducing the use of a speed control system 12 uses a speed range R as an input. In the present example, the speed range R is defined by a reference speed VR and a speed span VS.

Thus, an upper limit Vmax of the speed range R can be calculated as the sum of the reference speed VR and the speed span VS.

A lower limit Vmin of the speed range R can be calculated by subtracting the speed span VS from the reference speed VR.

In a first step S1 of the method for inducing the use of a speed control system of a vehicle, the current speed value V is received. The current speed value V describes a current speed of the vehicle 10.

In the present example, a series of received current speed values V is shown in Figure 2 in the form of a curve.

In a second step S2, it is determined whether the current speed value V lies within the speed range R.

In the present example, the current speed value V lies within the speed range R starting from a first point in time t1.

Thereafter, in a third step S3, it is determined whether the current speed value V has been lying within the speed range R for a first time period T or longer.

In other words, starting from t1, the time is counted until the current speed value V exits the speed range R or an end of the first time period T is reached.

In the present example, the first time period T is reached at a second point in time t2.

If the current speed value V has been lying within the speed range R for the first time period T or longer, a location check is performed in a fourth step S4.

In this context, an evaluation is performed whether the vehicle 10 is located in an area where the use of the speed control system 12 is allowed and recommended. For the ease of explanation, in the present example, the use of the speed control system is only allowed and recommended on highways.

Thus, if the vehicle 10 is located on a highway, the method is continued. Otherwise, the method is abandoned.

Furthermore, if the current speed value V has been lying within the speed range R for the first time period T or longer, a speed limit check is performed in a fifth step S5. The fifth step S5 may be performed in parallel to the fourth step S4.

This means that a current speed limit information VL describing a speed limit applicable in a current location of the vehicle 10 is received. The current speed limit information VL may be provided by a road sign recognition system or by a map of the navigation system.

The received current speed limit information VL is compared to the current speed value V.

In a case in which the current speed limit information VL exceeds the current speed value V, a warning message W is triggered. The warning message W will be explained in more detail further below.

If the current speed value V equals the current speed limit information VL or is smaller than the current speed limit information VL, the method is continued without the warning message W.

Moreover, in a sixth step S6, an average speed value VA for the vehicle 10 is calculated. In the present example, the average speed value VA is calculated as the average of the upper limit Vmax and the lower limit Vmin of the speed range R.

Thus, in the present example, the average speed value VA corresponds to the reference speed VR.

Subsequently, in a seventh step S7, a message M to a user of the vehicle 10 is triggered.

Of course, this is only done under the condition that the current speed value V has been lying within the speed range R for the first time period T or longer.

A further condition is that the vehicle 10 is located in an area where the use of the speed control system 12 is allowed and recommended, i.e. on a highway in the present example.

The message M comprises a recommendation to use the speed control system 12.

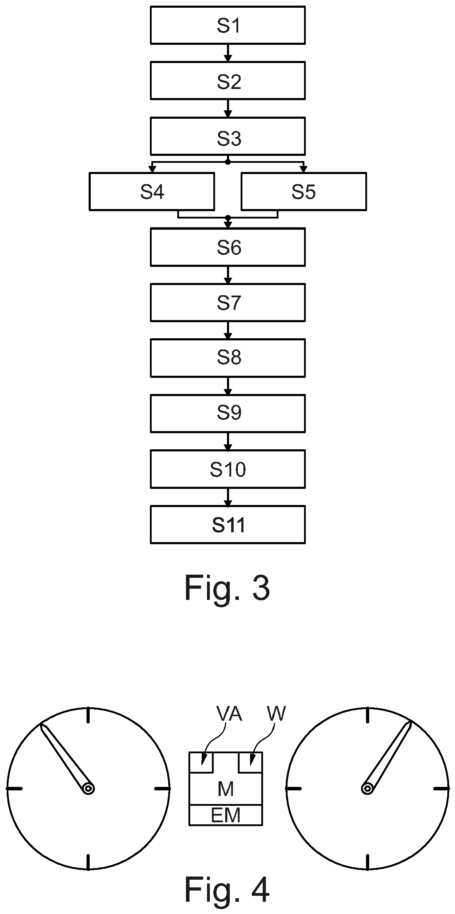

The message M comprises a visual message in the present example, which may best be seen in Figure 4.

Moreover, the message M is provided for a third time period TM only.

In an optional eighth step S8, the average speed value VA may be integrated into the message M.

In a case in which the current speed value V exceeds the current speed limit information VL, the above-mentioned warning message W is also integrated into the message M (cf. Figure 4).

Subsequently, in a step S9, a user input may be received in response to the message M.

In the present example, the user input comprises an acceptance of the recommendation to use the speed control system 12 and, thus, triggers an activation of the speed control system 12.

Thereafter, in a tenth step S 10, a target speed of the speed control system 12 is set.

In a case in which the average speed value VA equals the current speed limit information VL or is lower than the current speed limit information VL, the average speed value VA is provided to the speed control system 12 as a target speed.

In a case in which the average speed value VA exceeds the current speed limit information VL, the current speed limit information VL is provided to the speed control system as a target speed. As has been explained before, the latter case goes together with the warning message W being delivered to the driver.

In an optional eleventh step S 11, an energy consumption of the vehicle 10 is determined before triggering the activation of the speed control system 12 and after having triggered the activation of the speed control system 12.

More precisely, in step S 11, the determination of the energy consumption of the vehicle 10 starts if it is determined that the current speed value V lies within the speed range R, i.e. after the performance of step S2. Then, in the present example, the energy consumption is determined until the second point in time t2. Consequently, the energy consumption of the vehicle 10 before triggering the activation of the speed control system 12 is known. The energy consumption is also determined after the second point in time t2, when the speed control system 12 has been activated. Consequently, the energy consumption is known for a time after the speed control system 12 has been triggered.

In Figure 2, the energy consumed by the vehicle 10 before activating the speed control system 12 is represented by the surface is below the curve indicating the throttle position P.

The energy consumption may be determined until the end of a drive cycle of the vehicle 10.

At this point in time, the energy consumption of the vehicle 10 before triggering the activation of the speed control system 12, i.e. before the second point in time t2, and after having triggered the speed control system 12 may be compared.

Additionally, an energy consumption message EM may be provided to the user of the vehicle10. The energy consumption message EM describes at least a difference of the energy consumption of the vehicle before triggering the activation of the speed control system 12 and after having triggered the activation of the speed control system 12.

It is noted that even though in Figure 4 both the message M and the energy consumption message EM are represented, it is clear that the message M and the energy consumption message EM may as well be displayed at different points in time.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: speed control system
- 14: data processing apparatus
- 16: data processing unit
- 18: data storage unit
- 20: computer-readable storage medium
- 22: computer program
- 24: means for carrying out a method for inducing the use of a speed control system

- A1: acceleration phase
- A2: acceleration phase
- A3: acceleration phase
- A4: acceleration phase
- EM: energy consumption message
- M: message
- P: throttle position
- R: speed range
- S1: first step
- S2: second step
- S3: third step
- S4: fourth step
- S5: fifth step
- S6: sixth step
- S7: seventh step
- S8: eighth step
- S9: ninth step
- S10: tenth step
- S11: eleventh step
- t1: first point in time
- t2: second point in time
- T: first time period
- TM: third time period
- V: current speed value of the vehicle
- VA: average speed value
- VL: speed limit information
- Vmax: upper limit of the speed span
- Vmin: lower limit of the speed span
- VR: reference speed
- VS: speed span
- W: warning message

## Claims

1. A method for inducing the use of a speed control system (12) of a vehicle (10), comprising:
- receiving a current speed value (V) describing a current speed of the vehicle (10) (S1),
- triggering a message (M) to a user of the vehicle (10), if the current speed value (V) has been lying within a speed range (R) for a first time period (T) or longer, wherein the message (M) comprises a recommendation to use the speed control system (12) (S7).

2. The method of claim 1, further comprising receiving a user input in response to the message (M) and triggering an activation of the speed control system (12), if the user input comprises an acceptance of the message (M) (S9).

3. The method of claim 1 or 2, further comprising determining an average speed value (VA) of the vehicle (10) (S6).

4. The method of claim 3, further comprising
- integrating the average speed value (VA) in the message (M) (S8) and/or
- providing the average speed value (VA) to the speed control system (12) when triggering the activation of the speed control system (12), wherein the average speed value (VA) is used as a target speed of the speed control system (12) (S10).

5. The method of any one of claims 2 to 4, further comprising determining an energy consumption rate of the vehicle (10) after having triggered the activation of the speed control system (12) (S11) and/or estimating an energy consumption rate that the vehicle (10) would have had without activation of the speed control system (12).

6. The method of claim 5, further comprising determining an energy consumption of the vehicle (10) during a second time period after having triggered the activation of the speed control system (12) based on the determined energy consumption rate and/or estimating an energy consumption of the vehicle (10) during the second time period that the vehicle (10) would have had without activation of the speed control system (12).

7. The method of claim 6, further comprising:
triggering an energy consumption message (EM) to the user of the vehicle (10), wherein the energy consumption message (EM) describes at least a difference of the estimated energy consumption that the vehicle (10) would have had during the second time period without activation of the speed control system and the energy consumption of the vehicle (10) during the second time period after having triggered the activation of the speed control system (12).

8. The method of any one of the preceding claims, further comprising evaluating whether the vehicle (10) is located in an area where the use of the speed control system (12) is allowed and/or recommended (S4) and triggering the message (M) only if the vehicle (10) is located in an area where the use of the speed control system (12) is allowed and/or recommended.

9. The method of any one of the preceding claims, wherein the message (M) is provided for a third time period (TM) only.

10. The method of any one of the preceding claims, wherein the message (M) comprises a visual message and/or an audio message

11. The method of any one of the preceding claims, further comprising:
- receiving a current speed limit information (VL) describing a speed limit applicable in a current location of the vehicle (10), and
- triggering a warning message (W), if the current speed value (V) exceeds the current speed limit information (VL) (S5).

12. A data processing apparatus (14) comprising means (24) for carrying out the method of any one of the preceding claims.

13. A computer program (22) comprising instructions which, when the computer program (22) is executed by a computer, cause the computer to carry out the method of claims 1 to 11.

14. A computer-readable storage medium (20) comprising instructions which, when executed by a computer, cause the computer to carry out the method of claims 1 to 11.

15. A speed control system (12) for a vehicle (10) comprising a data processing apparatus (14) according to claim 12.

16. A vehicle (10) comprising a data processing apparatus (14) according to claim 12 and/or a speed control system (12) according to claim 15.

## Amended claims

### Amended claims in accordance with Rule 137(2) EPC.

1. A method for inducing the use of a speed control system (12) of a vehicle (10), comprising:
- receiving a current speed value (V) describing a current speed of the vehicle (10) (S1),
- triggering a message (M) to a user of the vehicle (10), if the current speed value (V) has been lying within a speed range (R) for a first time period (T) or longer, wherein the message (M) comprises a recommendation to use the speed control system (12) (S7)
**characterized by**:
- determining an average speed value (VA) of the vehicle (10) (S6),
- integrating the average speed value (VA) in the message (M) (S8) and/or providing the average speed value (VA) to the speed control system (12) when triggering the activation of the speed control system (12), wherein the average speed value (VA) is used as a target speed of the speed control system (12) (S10).

2. The method of claim 1, further comprising receiving a user input in response to the message (M) and triggering an activation of the speed control system (12), if the user input comprises an acceptance of the message (M) (S9).

3. The method of any of the preceding claims, further comprising determining an energy consumption rate of the vehicle (10) after having triggered the activation of the speed control system (12) (S11) and/or estimating an energy consumption rate that the vehicle (10) would have had without activation of the speed control system (12).

4. The method of claim 3, further comprising determining an energy consumption of the vehicle (10) during a second time period after having triggered the activation of the speed control system (12) based on the determined energy consumption rate of the vehicle (10) after having triggered the activation of the speed control system (12) and/or estimating an energy consumption of the vehicle (10) during the second time period that the vehicle (10) would have had without activation of the speed control system (12).

5. The method of claim 4, further comprising:
triggering an energy consumption message (EM) to the user of the vehicle (10), wherein the energy consumption message (EM) describes at least a difference of the estimated energy consumption that the vehicle (10) would have had during the second time period without activation of the speed control system and the energy consumption of the vehicle (10) during the second time period after having triggered the activation of the speed control system (12).

6. The method of any one of the preceding claims, further comprising evaluating whether the vehicle (10) is located in an area where the use of the speed control system (12) is allowed and/or recommended (S4) and triggering the message (M) only if the vehicle (10) is located in an area where the use of the speed control system (12) is allowed and/or recommended.

7. The method of any one of the preceding claims, wherein the message (M) is provided for a third time period (TM) only.

8. The method of any one of the preceding claims, wherein the message (M) comprises a visual message and/or an audio message

9. The method of any one of the preceding claims, further comprising:
- receiving a current speed limit information (VL) describing a speed limit applicable in a current location of the vehicle (10), and
- triggering a warning message (W), if the current speed value (V) exceeds the current speed limit information (VL) (S5).

10. A data processing apparatus (14) comprising means (24) for carrying out the method of any one of the preceding claims.

11. A computer program (22) comprising instructions which, when the computer program (22) is executed by a computer, cause the computer to carry out the method of claims 1 to 9.

12. A computer-readable storage medium (20) comprising instructions which, when executed by a computer, cause the computer to carry out the method of claims 1 to 9.

13. A speed control system (12) for a vehicle (10) comprising a data processing apparatus (14) according to claim 10.

14. A vehicle (10) comprising a data processing apparatus (14) according to claim 10 and/or a speed control system (12) according to claim 13.
